# EUROPÄISCHE PATENTANMELDUNG

(11) **EP 1 178 325 A1**
(43) Veröffentlichungstag der Anmeldung: **06.02.2002**
(21) Anmeldenummer: 00116618.0
(22) Anmeldetag: 01.08.2000
(51) Int. Cl.: G01R 31/34, H02K 15/00

(54) **Verfahren zum Betrieb eines Generators und Generatoranlage**

(71) Anmelder: SIEMENS AKTIENGESELLSCHAFT, 80333 München (DE)
(72) Erfinder: Koziel, Reinhold, 45470 Muelheim (DE); Stamm, Michael, 45475 Muelheim (DE)

(57) **Zusammenfassung**

Um einen möglichst unterbrechungsfreien Betrieb des Generators zu ermöglichen, wird der Läufer (4) des Generators auf einen elektrischen Kontakt zwischen seiner Läuferwelle (6) und seiner Läuferwicklung (8) überwacht und bei einem Erkennen eines solchen Kontakts wird während des Generatorbetriebs ein Stromfluss zwischen der Läuferwelle (6) und der Läuferwicklung (8) erzeugt. Ist der elektrische Kontakt, auch als Läufererdschluss bezeichnet, durch ein sicherheitstechnisch nicht bedenkliches Metallspänchen gebildet, so wird dieses dadurch verglüht und der Läufererdschluss beseitigt, ohne dass ein Abschalten des Generators erforderlich wäre.

## Beschreibung

Die Erfindung betrifft ein Verfahren zum Betrieb eines Generators, insbesondere eines Turbogenerators sowie eine Generatoranlage, insbesondere eine Turbogeneratoranlage.

Insbesondere auf dem Gebiet der Energieerzeugung wird ein solcher Turbogenerator eingesetzt, der typischerweise für eine elektrische Leistung bis zu einigen 100 Megawatt ausgelegt ist. Zur Erzeugung des elektrischen Stroms weist der Generator einen rotierbaren Läufer sowie einen feststehenden Stator auf. Der Läufer umfasst dabei eine Läuferwelle, auf der eine Läuferwicklung mit einer Mehrzahl von Windungen aufgebracht ist. Der Stator weist ebenfalls eine Statorwicklung auf. Die einzelnen Windungen der Läuferwicklung sind gegeneinander und zur Läuferwelle hin isoliert. Die Isolierung verhindert einen unerwünschten Kontakt zwischen den Windungen untereinander und zwischen der Wicklung und der Läuferwelle. Die Läuferwelle ist in der Regel geerdet.

Aufgrund der bei einem Turbogenerator auftretenden hohen Leistungsdichten führt ein elektrischer Kontakt zwischen der Läuferwelle und zwei oder mehreren Windungen der Läuferwicklung zu einer hohen thermischen Belastung des Läufers. Diese zieht unter ungünstigen Umständen ein Verbiegen der Läuferwelle nach sich und kann damit zu einem schweren Generatorschaden führen. Es ist daher vorgesehen, beim Betrieb den Generator auf einen elektrischen Kontakt zwischen der Läuferwicklung und der Läuferwelle zu überwachen. Diese Überwachung wird als Läufererdschlussüberwachung bezeichnet. Hierzu ist eine Überwachungseinrichtung vorgesehen, die einerseits mit der Läuferwelle und andererseits mit der Läuferwicklung elektrisch über geeignete Abgriffe, beispielsweise Bürsten oder sonstige Schleifkontakte, verbunden ist. Zur Überwachung wird in der Regel von der Überwachungseinrichtung ein Signal abgegeben und aus dem zeitlichen Verhalten des Signals werden Rückschlüsse auf das Vorhandensein oder Nichtvorhandensein eines elektrischen Kontakts zwischen der Läuferwicklung und der Läuferwelle gezogen. Sobald ein solcher elektrischer Kontakt, also ein Läufererdschluss, erfasst wird, gibt die Überwachungseinrichtung ein Signal zum Abschalten des Generators ab, um einen Generatortotalschaden zu vermeiden. Denn die Detektion eines Läufererdschlusses deutet darauf hin, dass eine Isolierung einer Läuferwindung schadhaft ist, und dass die Gefahr besteht, dass ein hoher Strom über die Läuferwelle abfließt.

Der Erfindung liegt die Aufgabe zugrunde, ein Verfahren zum Betrieb eines Generators sowie eine Generatoranlage anzugeben, wobei ein möglichst unterbrechungsfreier Betrieb des Generators ermöglicht ist.

Die Aufgabe wird gemäß der Erfindung gelöst durch ein Verfahren zum Betrieb eines Generators, insbesondere zum Betrieb eines Turbogenerators, mit einem eine Läuferwelle und eine Läuferwicklung umfassenden Läufer, bei dem der Läufer auf einen elektrischen Kontakt zwischen der Läuferwelle und der Läuferwicklung überwacht wird, wobei bei einem Erkennen eines solchen Kontakts ein Stromfluss zwischen der Läuferwelle und der Läuferwicklung während des Generatorbetriebs erzeugt wird.

Die Erfindung geht hierbei von der Überlegung aus, dass für einen elektrischen Kontakt zwischen der Läuferwelle und der Läuferwicklung, also für einen Läufererdschluss, neben einer schadhaften Isolierung der Läuferwicklung auch kleine leitende Teilchen, beispielsweise Metallspäne, verantwortlich sein können. Solche kleinen Metallspäne gelangen beispielsweise bei der Erstinstallation des Generators oder bei Montagearbeiten am Generator in diesen hinein. Während des Generatorbetriebs wandern die Metallspänchen im Generator und können unter ungünstigen Umständen einen Läufererdschluss hervorrufen, ohne dass eine für den Betrieb des Generators bedenkliche Schädigung einer Isolierung einer Läuferwindung vorliegt. Wird der Läufererdschluss über ein Metallspänchen herbeigeführt, so besteht also keine Gefahr eines starken Stromflusses zwischen der Läuferwicklung und dem Läufer. Denn hierzu müssten zumindest zwei Windungen mit dem Läufer elektrisch in Kontakt sein.

Bei einem durch ein Metallspänchen hervorgerufenen elektrischen Kontakt besteht also keine Notwendigkeit, den Generator abzuschalten. Da jedoch von einer Überwachungseinrichtung der Läufererdschluss zwar erfasst wird, aber nicht detektierbar ist, ob der Läufererdschluss lediglich von einem Metallspänchen hervorgerufen wird, wird bei dem herkömmlichen Verfahren der Generator zwangsweise abgeschaltet.

Mit der Erfindung wird nun der entscheidende Vorteil erzielt, dass durch Zuschalten eines Stroms zwischen der Läuferwicklung und der Läuferwelle ein solches Metallspänchen während des Generatorbetriebs verglüht wird. Der Läufererdschluss wird also behoben. Ein Abschalten des Generators ist demnach nicht notwendig. Die Ausfallzeiten des Generators und damit die wirtschaftlichen Einbußen sind reduziert.

Gemäß einer bevorzugten Ausführung wird die Überwachung auf einen elektrischen Kontakt zwischen der Läuferwelle und der Läuferwicklung unterbrochen, solange zwischen der Läuferwicklung und der Läuferwelle der Strom geschalten ist, um die Überwachungseinrichtung vor einem Schaden durch den Stromfluss zu bewahren.

Vorzugsweise wird der Stromfluss nach einem vorgegebenen Zeitintervall wieder abgeschaltet und die Überwachung erneut durchgeführt. Dadurch lässt sich feststellen, ob der Läufererdschluss behoben worden ist, oder ob er weiterhin besteht.

Gemäß einer zweckdienlichen Weiterbildung wird der Generator dann abgeschaltet, wenn ein Läufererdschluss auch nach einmaligem oder mehrmaligem Aufschalten des Stromflusses erfasst wird. Dabei ist darauf zu achten, dass zwischen dem erstmaligen Erfassen eines Läufererdschlusses und dem Abschalten des Generators eine nicht zu große Zeitspanne verstreichen darf, da das Bestehenbleiben des Läufererdschlusses nach dem Aufschalten eines Stromflusses ein Indiz dafür ist, dass der Läufererdschluss nicht durch ein Metallspänchen, sondern vielmehr durch eine schadhafte Isolierung hervorgerufen ist. In diesem Fall ist eine Abschaltung des Generators unumgänglich.

Vorzugsweise ist die Stromleistung des aufgeschalteten Stroms derart bemessen, dass ein elektrisch leitfähiges Teilchen, beispielsweise das erwähnte Metallspänchen, welches für den elektrischen Kontakt verantwortlich ist, verglüht. Damit wird sichergestellt, dass der Läufererdschluss, sofern er durch ein Metallspänchen hervorgerufen wird, behoben wird.

Um möglichst rasch Klarheit zu bekommen, ob der Läufererdschluss über ein Metallspänchen hervorgerufen wird, wird der Stromfluss vorzugsweise als Stromimpuls zugeschaltet. Dessen Impulsdauer liegt dabei vorzugsweise im Bereich von Sekunden und insbesondere im Bereich von Bruchteilen einer Sekunde. Damit wird gewährleistet, dass im Bedarfsfall, wenn eine schadhafte Isolierung für den Erdschluss verantwortlich ist, der Generator ausreichend schnell abgeschaltet wird, ohne dass ein größerer Schaden zu befürchten ist. Die Impulsleistung des Stroms ist dabei ausreichend groß, um ein Verglühen eines Metallspänchens herbeizuführen.

Die Aufgabe wird gemäß der Erfindung weiterhin gelöst durch eine Generatoranlage, insbesondere eine Turbogeneratoranlage, mit einem Läufer, der eine Läuferwelle und eine Läuferwicklung aufweist, mit einer Überwachungseinrichtung, die zur Erfassung eines elektrischen Kontakts zwischen der Läuferwelle und der Läuferwicklung ausgebildet ist und hierzu mit der Läuferwicklung sowie mit der Läuferwelle elektrisch verbunden ist, und mit einer mit der Überwachungseinrichtung verbundenen Steuereinrichtung, die derart ausgelegt ist, dass sie während des Generatorbetriebs bei einer Erfassung eines elektrischen Kontakts eine Stromquelle zwischen die Läuferwelle und die Läuferwicklung schaltet.

Die im Hinblick auf das Verfahren angeführten Vorteile und bevorzugten Ausführungsformen sind sinngemäß auf die Generatoranlage zu übertragen. Weitere bevorzugte Ausführungsformen der Generatoranlage sind in den Unteransprüchen niedergelegt.

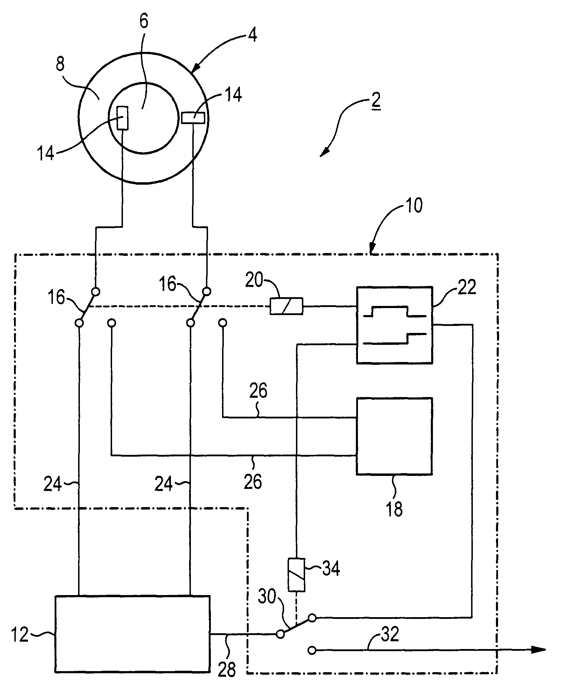

Ein Ausführungsbeispiel der Erfindung wird im Folgenden anhand der einzigen Figur erläutert. Die Figur zeigt in einer stark schematischen Darstellung eine Generatoranlage.

Gemäß der Figur umfasst eine Generatoranlage 2 einen Generator, von dem lediglich sein Läufer 4 in einer Aufsicht in Richtung seiner Längsachse schematisch angedeutet ist. Der Läufer 4 weist eine Läuferwelle 6 auf, die von einer Läuferwicklung 8 umgeben ist. Die Läuferwelle 6 sowie die Läuferwicklung 8 stehen jeweils mit einer Steuereinrichtung 10 und über diese mit einer Überwachungseinrichtung 12 elektrisch in Verbindung. Hierzu sind an der Läuferwelle 6 und an der Läuferwicklung 8 jeweils Abgriffe 14, beispielsweise in Form von Bürsten oder sonstigen Schleifkontakten, vorgesehen.

Die Läuferwelle 6 sowie die Läuferwicklung 8 sind über Schaltkontakte 16 wahlweise mit der Überwachungseinrichtung 12 oder mit einer potentialfreien Stromquelle 18 verbindbar. Die Schaltkontakte 16 sind als Relaiskontakte ausgebildet und werden über ein gemeinsames Stellglied 30 betätigt. Das Stellglied 18 wird dabei von einem als Zeitrelais ausgebildeten Zeitglied 22 angesteuert.

Bei zugeschalteter Überwachungseinrichtung 12, wie es in der Figur dargestellt ist, ist also zwischen den Abgriffen 14, den Schaltkontakten 16 und der Überwachungseinrichtung 12 ein Überwachungskreis 24 gebildet. Werden die Schaltkontakte 16 umgeschaltet, so ist der Überwachungskreis 24 unterbrochen und die Überwachungseinrichtung 12 von den Abgriffen 14 getrennt. Gleichzeitig wird ein Stromkreis 26 umfassend die Stromquelle 18, die Schaltkontakte 16 und die Abgriffe 14 geschlossen.

Von der Überwachungseinrichtung 12 geht eine Signalleitung 28 ab, die über einen weiteren Schaltkontakt 30 wahlweise mit dem Zeitglied 22 oder über eine weiterführende Leitung 32 mit einer nicht dargestellten Abschalteinheit für den Generator verbindbar ist. Der weitere Schaltkontakt 30 ist wiederum als Relaiskontakt ausgebildet und wird über ein weiteres Stellglied 34 betätigt, das von dem Zeitglied 22 ansteuerbar ist.

Während des Betriebs des Generators ist der Überwachungskreis 24 geschlossen und die Überwachungseinrichtung 12 überwacht den Läufer 4 auf einen Läufererdschluss. Ein solcher Läufererdschluss liegt dann vor, wenn zwischen einer Windung der Läuferwicklung 8 und der Läuferwelle 6 ein elektrischer Kontakt besteht. Im Normalfall ist die Läuferwicklung 8 zur geerdeten Läuferwelle 6 elektrisch isoliert. Ein Läufererdschluss wird hervorgerufen entweder durch eine schadhafte Isolierung der Läuferwicklung 8, die im schlimmsten Fall zu einem Totalschaden des Generators führen kann. Der Läufererdschluss kann andererseits auch durch ein elektrisch leitfähiges Teilchen hervorgerufen werden, ohne dass die Isolierung der Läuferwicklung einen wesentlichen Schaden aufweist. Ein solches leitfähiges Teilchen ist beispielsweise ein Metallspänchen, das bei der Montage des Generators oder bei einer Revisionsarbeit in den Generator gelangt ist.

In beiden Fällen, also bei einer schadhaften Isolierung und bei einem Metallspänchen, wird von der Überwachungseinrichtung 12 ein Läufererdschluss detektiert. Daraufhin gibt die Überwachungseinrichtung 12 ein entsprechendes Warnsignal über die Signalleitung 28 ab. Im Normalfall ist diese über den weiteren Schaltkontakt 30 mit dem Zeitglied 22 verbunden, welches bei Eingang des Warnsignals das Stellglied 20 betätigt, so dass der Stromkreis 26 geschlossen und der Überwachungskreis 24 getrennt wird. Nunmehr fließt zwischen der Läuferwicklung 8 und der Läuferwelle 6 über den detektierten elektrischen Kontakt zwischen ihnen ein elektrischer Strom. Nach Ablauf eines durch das Zeitglied 22 vorgegebenen Zeitintervalls wird das Stellglied 20 wiederum betätigt und die Schaltkontakte 16 umgelegt, so dass der Überwachungskreis 24 wieder geschlossen ist. Das Zeitintervall liegt dabei vorzugsweise im Bereich des Bruchteils einer Sekunde.

Falls der Läufererdschluss über ein Metallspänchen gebildet ist, fließt der über die Stromquelle 18 bereitgestellte Strom über dieses Metallspänchen. Die Stromhöhe und die Leistungsdichte ist dabei derart bemessen, dass das Metallspänchen verglüht, so dass der elektrische Kontakt zwischen Läuferwelle 6 und Läuferwicklung 8 wieder aufgehoben wird. In diesem Fall wird nach Umlegen der Schaltkontakte 16 und Schließen des Überwachungskreises 24, also bei erneuter Aufnahme der Überwachung durch die Überwachungseinrichtung 12, kein Läufererdschluss erfasst. Der Generator kann also ohne Unterbrechung weiter betrieben werden.

Falls weiterhin ein Läufererdschluss erfasst wird, kann je nach Bedarf der Stromkreis 26 noch weitere Male geschlossen werden. Nach einer vorgegebenen Anzahl von Schaltungen betätigt das Zeitglied 22, sofern weiterhin ein Warnsignal über die Signalleitung 28 eingeht, das weitere Stellglied 34. Das Warnsignal wird dann über die weiterführende Leitung 32 an die Abschalteinheit weitergeleitet, so dass der Generator abgeschalten wird.

Vorzugsweise ist die von der potentialfreien Stromquelle 18 bereitgestellte Stromstärke und die Zeitdauer des Stromflusses durch den Stromkreis 26 derart bemessen, dass bereits bei einem einmaligen Schalten der Schaltkontakte 16 ein Metallspänchen verglüht. Damit wird gewährleistet, dass die Zeitdauer zwischen der Abgabe des ersten Warnsignals und dem Abschalten des Generators, sofern ein bleibender Erdschluss detektiert wird, möglichst kurz ist. Denn ein bestehenbleibender Läufererdschluss deutet auf eine schadhafte Isolierung hin, so dass ein zügiges Abschalten des Generators erforderlich ist.

Der entscheidende Vorteil der Generatoranlage 2, bei der bei Erfassung eines Erdschlusses zunächst ein Strom zwischen die Abgriffe 14 aufgeschaltet wird, liegt darin, dass lediglich bei einer sicherheitstechnisch bedenklichen Schädigung der Isolierung der Läuferwicklung ein Abschalten des Generators herbeigeführt wird. Wird der Erdschluss dagegen lediglich von einem Metallspänchen herbeigeführt, was für den Generatorbetrieb weniger bedenklich ist, so wird durch die Beaufschlagung des Stroms der Läufererdschluss automatisch und während des Generatorbetriebs behoben. Es wird also in diesem Fall ein Abschalten des Generators vermieden, wodurch sich die Zeitverfügbarkeit des Generators und damit sein wirtschaftlicher Nutzen erhöht.

## Patentansprüche

1. Verfahren zum Betrieb eines Generators, insbesondere zum Betrieb eines Turbogenerators, mit einem eine Läuferwelle (6) und eine Läuferwicklung (8) umfassenden Läufer (4), bei dem der Läufer (4) auf einen elektrischen Kontakt zwischen der Läuferwelle (6) und der Läuferwicklung (8) überwacht wird, wobei bei einem Erkennen eines solchen Kontakts ein Stromfluss zwischen der Läuferwelle (6) und der Läuferwicklung (4) während des Generatorbetriebs erzeugt wird.

2. Verfahren nach Anspruch 1, bei dem während des Stromflusses die Überwachung unterbrochen ist.

3. Verfahren nach Anspruch 1 oder 2, bei dem der Stromfluss nach einem vorgegebenen Zeitintervall abgeschaltet und die Überwachung durchgeführt wird.

4. Verfahren nach einem der vorhergehenden Ansprüche, bei dem der Generator abgeschaltet wird, wenn nach einmaligem oder mehrmaligem Erzeugen des Stromflusses der elektrische Kontakt weiterhin erfasst wird.

5. Verfahren nach einem der vorhergehenden Ansprüche, bei dem die Stromleistung derart bemessen ist, dass ein elektrisch leitfähiges Teilchen, welches für den elektrischen Kontakt verantwortlich ist, verglüht.

6. Verfahren nach einem der vorhergehenden Ansprüche, bei dem der Stromfluss als Stromimpuls zugeschaltet wird.

7. Verfahren nach Anspruch 6, bei dem die Impulsdauer im Bereich von Sekunden, insbesondere im Bereich kleiner einer Sekunde liegt.

8. Generatoranlage (2), insbesondere Turbogeneratoranlage, mit einem Läufer (4), der eine Läuferwelle (6) und eine Läuferwicklung (8) aufweist, mit einer Überwachungseinrichtung (12), die zur Erfassung eines elektrischen Kontakts zwischen der Läuferwelle (6) und der Läuferwicklung (8) ausgebildet ist und hierzu mit der Läuferwelle (6) sowie mit der Läuferwicklung (8) elektrisch verbunden ist, und mit einer mit der Überwachungseinrichtung (12) verbundenen Steuereinrichtung (10), die derart ausgelegt ist, dass sie während des Generatorbetriebs bei einer Erfassung eines elektrischen Kontakts eine Stromquelle (18) zwischen die Läuferwelle (6) und die Läuferwicklung (8) schaltet.

9. Generatoranlage (2) nach Anspruch 8, bei der bei zugeschalteter Stromquelle (18) die elektrische Verbindung der Überwachungseinrichtung (12) mit dem Läufer (4) unterbrochen ist.

10. Generatoranlage (2) nach Anspruch 8 oder 9, bei der die Steuereinrichtung (10) ein Zeitglied (22) aufweist, das ein Zeitintervall für das Zuschalten der Stromquelle (18) festlegt.

11. Generatoranlage (2) nach einem der Ansprüche 8 bis 10, bei der die Steuereinrichtung (10) derart ausgelegt ist, dass sie bei Bestehen des elektrischen Kontakts nach einmaligem oder mehrmaligem Zuschalten der Stromquelle (18) ein Abschaltsignal zum Abschalten des Generators herbeiführt.
